# EUROPÄISCHE PATENTSCHRIFT

(11) **EP 2 233 442 B1**
(45) Veröffentlichungstag und Bekanntmachung des Hinweises auf die Patenterteilung: **15.06.2016**
(21) Anmeldenummer: 10002457.9
(22) Anmeldetag: 09.03.2010
(51) Int. Cl.: C02F 11/18, C02F 1/02, C02F 11/12, C02F 11/04, C02F 9/00

(54) **Verfahren zur thermischen Hydrolyse von Klärschlamm**
Process for the thermal hydrolysis of sewage sludge
Procédé d'hydrolyse thermique de boues d'épuration

(30) Priorität: 25.03.2009 DE 102009014776
(43) Veröffentlichungstag der Anmeldung: 29.09.2010
(60) Teilanmeldung: 14198907.9
(73) Patentinhaber: Eliquo Stulz GmbH, 79865 Grafenhausen (DE)
(72) Erfinder: Buchmüller, Marianne, Dr., 79777 Ühlingen-Birkendorf (DE)
(74) Vertreter: Grünecker Patent- und Rechtsanwälte PartG mbB

(56) Entgegenhaltungen:
- EP-A1- 1 894 893
- EP-B1- 1 198 424
- DE-A1- 10 117 321

## Beschreibung

Die Erfindung betrifft ein Verfahren zur thermischen Hydrolyse von Klärschlamm gemäß dem Oberbegriff von Anspruch 1.

Bei der Reinigung von kommunalem und gewerblichem Abwasser mittels mechanischbiologischer Verfahren fallen Klärschlämme an. Die Sicherung einer hohen Wasserqualität führte innerhalb der letzten Jahre zu einer fortschreitenden Weiterentwicklung der Abwasserbehandlung sowie einer Erhöhung des Anschlussgrades. Als Folge dieser Entwicklung wird mit einem ansteigenden Klärschlammaufkommen besonders in den Industriestaaten gerechnet. Nach Angaben der EU war ein Anstieg der Klärschlammtrockenmasse von 5,5 Mio. t in 1992 auf 8,3 Mio. t im Jahr 2005 zu verzeichnen.

Ein gefordertes Verwertungsgebot sieht für die Entsorgung der Klärschlämme in erster Linie eine Rückführung in den Stoffkreislauf durch eine Verwertung in der Landwirtschaft oder im Landbau vor. Die Akzeptanz dieses Entsorgungsweges ist jedoch stark abhängig vom tagespolitischen Geschehen und schwankt zwischen Befürwortung und vollständiger Ablehnung. Eine Ausschleusung aus dem Stoffkreislauf durch eine Deponierung würde eine Vernichtung sowohl von Schad- als auch von Wertstoffen bedeuten und ist seit 2005 nur noch nach einer Verbrennung der Klärschlämme zulässig.

Durch die Schlammfaulung als Standardverfahren der biologischen Schlammstabilisierung wird eine deutliche Reduzierung der Schlammtrockenmasse erreicht. Auch vor dem Hintergrund einer folgenden Verbrennung birgt dieser Verfahrensschritt ökologische und ökonomische Vorteile. Im Hinblick auf eine landwirtschaftliche Verwertung führt die anaerobe Stabilisierung zu einem lagerfähigen und hygienisch unbedenklicheren Produkt. Die Umsetzung der organischen Substanzen von belebten Schlämmen bleibt jedoch, da diese zum größten Teil aus schwer abbaubarer organischer Zellsubstanz bestehen, in der Regel auf 40 bis 50 % beschränkt.

Zahlreiche vorangegangene Untersuchungen haben bereits gezeigt, dass der limitierende Schritt des anaeroben Stoffwechselprozesses, die Hydrolyse partikulärer Substanz, durch eine gezielte Vorbehandlung des Klärschlammes unterstützt werden kann. So bewirkt ein Aufschluss der Zellmembranen die Freisetzung intrazellulären Materials und damit eine beschleunigte und weitergehende Stabilisierung. Der Aufschluss erfolgt durch die Einwirkung äußerer Kräfte, die chemischen, thermischen, mechanischen oder biologischen Ursprungs sein können.

Der dauerhaften Entsorgung der Klärschlämme geht in der Regel eine Zwischenlagerung derselben voraus. Aus diesem Grund müssen die Klärschlämme durch geeignete Stabilisierungsverfahren in einen lagerfähigen Zustand überführt werden, so dass negative Umwelteinflüsse infolge einer unkontrollierten Faulung ausgeschlossen werden. In der Mehrzahl der größeren kommunalen Abwasserreinigungsanlagen in Deutschland werden die Klärschlämme einer anaeroben Behandlung unterzogen, mit der unter geeigneten Randbedingungen eine Stabilisierung einhergeht. Als sekundäre Effekte sind hier die Verringerung der organischen Trockenmasse, die Verbesserung der Entwässerbarkeit, die Verminderung von Krankheitserregern sowie die Gewinnung und Nutzung von Faulgas zu nennen.

Die anaerobe Stabilisierung wird überwiegend im Temperaturbereich um 35 °C betrieben, in dem mesophile Mikroorganismen ihr Wachstumsoptimum besitzen. Daneben existiert für thermophile Bakterien ein weiteres Temperaturoptimum in einem relativ engen Bereich von 48 bis 55 °C. Obwohl letztere höhere Umsatzraten erreichen, hat sich weitgehend der mesophile Temperaturbereich durchgesetzt. Dieser birgt den Vorteil, dass die Aufheizung energiegünstiger realisiert werden kann und die Organismen weniger empfindlich auf Temperaturschwankungen reagieren. Eine thermophile Faulung kann unter dem Gesichtspunkt der Hygienisierung des Schlammes Vorteile ergeben, kommt jedoch nur vereinzelt zum Einsatz.

Der anaerobe Abbau organischer Substanz vollzieht sich nach heutigem Kenntnisstand in vier Phasen bis zu den Endprodukten Wasser, Methan und Kohlendioxid. In der einleitenden Hydrolysephase werden polymere Substrate durch Exoenzyme in niedermolekulare gelöste Bestandteile gespalten. Gefolgt von fermentativen Abbauvorgängen in der so genannten Versäuerungsphase ("Acidogenese"), werden die monomeren und oligomeren Bestandteile zu reduzierten organischen Verbindungen (zum Beispiel Fettsäuren, Aminosäuren und Alkohole) sowie Kohlendioxid und Wasserstoff abgebaut. Ein Teil der gebildeten Produkte (Acetat, Kohlendioxid, Wasserstoff) kann direkt von methanogenen Bakterien umgesetzt werden. Die restlichen Fermentationsprodukte müssen zunächst von acetogenen Bakterien, die in enger Symbiose mit den methanogenen Organismen stehen, zu Acetat umgewandelt werden. Etwa 70 % des gesamten umgesetzten Kohlenstoffs werden anschließend durch acetothrophe methanogene Mikroorganismen zu Methan und Kohlendioxid umgewandelt, während etwa 30 % über die direkte Umsetzung des intermediär gebildeten Wasserstoffs und Kohlendioxids durch hydrogenothrophe Methanbildner abgebaut werden.

Die Geschwindigkeit des gesamten anaeroben Abbauprozesses von Klärschlämmen wird durch den ersten Prozessschritt, die Hydrolyse, limitiert. Die Hydrolysegeschwindigkeit kann als Reaktion erster Ordnung beschrieben werden, bei der die Abbaukonstante temperaturabhängig ist und bei 35 °C Werte um 0,25 d⁻¹ annimmt. Dieser Teilprozess bestimmt in Abhängigkeit der Aufenthaltszeit letztendlich das Stabilisierungsergebnis. Wird die Aufenthaltszeit verkürzt, so reduziert sich ebenfalls der Abbau organischer Stoffe, da schwer zu hydrolysierende Substanzen den Reaktor weitgehend unverändert passieren können. Manche Substanzen wie zum Beispiel fakultativ anaerobe Bakterien werden im Faulprozess überhaupt nicht angegriffen. Solange jedoch sichergestellt ist, dass sich die methanogenen Bakterien im System weiter halten und vermehren können, verursacht die - durch die verkürzte Aufenthaltszeit verringerte - Hydrolyse lediglich einen Rückgang der Gasausbeute. Bei einer weiteren Verkürzung der Aufenthaltszeit unter drei Tagen kommt jedoch auch die Methanbildung zum Erliegen, weil die Generationszeit der methanogenen Bakterien unterschritten wird.

Mittels Desintegration, das heißt der Einwirkung von äußeren Kräften auf Klärschlämme, können die Klärschlämme zerkleinert werden. Je nach Intensität der eingetragenen Energie führt die Desintegration zu einer Auflösung der Flockenstruktur des Schlamms bis hin zu einem Aufschluss der im Schlamm enthaltenen Mikroorganismen. Die freigesetzten organischen Substanzen sind sowohl dem anaeroben, als auch dem aeroben Abbau leichter zugänglich. Aus diesem Grund ist der Einsatz der Desintegration an verschiedenen Orten einer Kläranlage möglich und sinnvoll. Besonders vorteilhaft ist die Desintegration bei schlecht hydrolysierbaren Schlämmen.

Klärschlämme können auch mittels thermischer Desintegrationsverfahren behandelt werden, wobei diese in niederthermische (Temperaturen kleiner als 100°C) und hochthermische Verfahren (Temperaturen größer als 100°C) unterteilt werden. Thermische Desintegrationsverfahren ermöglichen eine effiziente Möglichkeit des Aufschließens der im Schlamm enthaltenen Mikroorganismen und machen dadurch diese dem anaeroben als auch aeroben Abbau leichter zugänglich.

Aus der EP 1 198 424 B1 ist ein Verfahren zur kontinuierlichen Hydrolyse von organischem Material bekannt, wobei in einer Dampf/Schlamm-Mischeinheit dem Verfahren zugeführter Schlamm mit Entspannungsdampf aus einem Druckentlastungstank gemischt wird. Weiterhin wird von dem Druckentlastungstank Schlamm über eine Pumpe zu einem Schlamm/SchlammWärmetauscher gefördert, um den einströmenden Schlamm zu erwärmen.

Allerdings fällt der Entspannungsdampf entsprechend dem gewählten Druck im Druckentlastungstank an. Wird der Druck zu niedrig gewählt, fällt Entspannungsdampf mit entsprechend niedriger Temperatur an; wird der Druck im Druckentlastungstank höher gewählt, kann das Hydrolyseergebnis negativ beeinflusst werden. Die Vorerwärmung mit dem Entspannungsdampf ist daher direkt abhängig von den gewählten Verfahrensbedingungen im Druckentlastungstank und damit von den Hydrolysebedingungen.

Weiterhin kann mehr Entspannungsdampf anfallen, als tatsächlich in der Vorerwärmung verbraucht werden kann. Im Extremfall bedeutet dies, dass der Rohschlamm im Vorerwärmungstank zu sieden beginnt, was dort Inkrustierungen zur Folge hat. Durch den möglichen Überschuss an Entspannungsdampf bleiben gleichzeitig erhebliche Energiemengen ungenutzt, was die Wirtschaftlichkeit des Verfahrens einschränkt.

Der Entspannungsdampf enthält neben Wasserdampf auch flüchtige organische Bestandteile sowie Hydrolysegas. Diese werden dem Vorerwärmungstank zugeführt, wobei die flüchtigen organischen Bestandteile des Entspannungsdampfs leicht biologisch abbaubar sind. Da der Entspannungsdampf nicht sofort aus dem System abgeführt, sondern zurückgeführt und mit dem Rohschlamm vermischt wird, wird hier der Grundsatz verletzt, nach dem Reaktionsendprodukte für die Aufrechterhaltung eines maximalen Stoffumsatzes sofort aus dem System entnommen werden sollten.

Da der Schlamm unter nur geringem Überdruck mit dem Entspannungsdampf vermischt und erhitzt wird, muss nach der Vorerwärmung nahe am Siedepunkt stehender Schlamm auf Hydrolysedruck gebracht werden, wodurch eine hitzebeständige Pumpe erforderlich ist.

Auch das Rückpumpen des Schlamms zum Schlammwärmetauscher erfordert spezielle Pumpen, die die Rückführung relativ kostenaufwändig machen.

Weiterhin ist der konstruktive Aufwand für die Rückleitung von Schlamm zur Erwärmung von frisch zugeführtem Schlamm hoch, da der Wärmetauscher so ausgelegt werden muss, dass sich keine Verkrustungen oder Ablagerungen darin bilden. Die Rückführung muss so ausgelegt werden, dass eine kontinuierliche und gesicherte Förderung von Schlamm möglich ist, ohne dass es zu Verstopfungen in den Leitungen kommt.

Ein derartiger Schlamm/Schlamm-Wärmetauscher weist gemeinhin einen hohen Druckverlust auf. Dieser Druckverlust wird noch erhöht, wenn aufgrund bestimmter Regelzustände keine Wärme zurückgeführt werden muss, und damit der Schlamm in der Rückführung nicht bewegt wird. Das thixotrope Verhalten des Schlammes führt dazu, dass sich die Viskosität des stehenden Schlammes weiter erhöht, so dass bei Wiederaufnahme der Wärmerückführung ein sehr hoher Druckwiderstand überwunden werden muss, bis erneut Schlamm durch die Rückführung des Wärmetauschers fließt..

Die EP 1 894 893 A1 offenbart eine Anlage zur Behandlung von organischem Abfall, in der schlammiges Material unter hoher Temperatur und Druck behandelt wird. In diesem System ist ein Vorheizbehälter und ein Kühler vorgesehen, die jeweils Heiz- bzw. Kühlwindungen aufweisen, die von einem Heizmittel durchströmt werden. Zusätzlich wird gelehrt, dass Dampf in den organischen Schlamm eingeblasen wird.

In der DE 101 17 321 A1 wird gelehrt, dass in einem Verfahren zur Behandlung von biogenen Restmassen die bei der Entspannung im Entspannungstank entstehenden Dämpfe über Ringleitungen zu Wärmetauschern geleitet werden, um zugeführte biogene Restmassen vorzuwärmen. Das in den Wärmetauschern gebildete Kondensat wird über die Ringleitungen zu den Entspannungsbehältern zurückgeführt. Auch bei diesem Verfahren ergibt sich das Problem, dass die Ringleitungen so ausgelegt werden müssen, dass es zu keinerlei Verstopfung durch Bestandteile des Kondensats kommt. Weiterhin ist die Wärmekapazität des Dampfes nicht sehr hoch.
Bei der DE 101 17 321 A1 handelt es sich um ein diskontinuierliches Verfahren in den einzelnen Entspannungstanks, da diese jeweils verschlossen werden und für eine bestimmte Zeit ein gewisser Druck gehalten wird. Erst bei der Öffnung der Entspannungstanks können die Entspannungsdämpfe über die Ringleitung zurückgeleitet werden. Dadurch erfordert dieses Verfahren mehrere parallel angeordnete Entspannungstanks, um ein zumindest quasi-kontinuierliches Verfahren zu ermöglichen.

In der US 2004/0060863 A1 wird ein Verfahren für die thermische Hydrolyse von Schlamm offenbart, wobei Schlamm in mehreren parallel angeordneten Behältnissen mit Dampf aus einem jeweils anderen Behältnis erhitzt wird. Auch hier handelt es sich nur um ein quasi-kontinuierliches Verfahren, da mehrere Reaktoren parallel angeordnet werden müssen.

Die EP 07 84 504 B1 offenbart ein Verfahren, in dem Hydrolysat aus einem Reaktionsgefäß verwendet wird, um zu einem anderen Reaktionsgefäß zugeführtes Hydrolysat zu erwärmen.

Auch die WO 2008/026932 A1, WO 2007/117152 A1, EP 996 595 B1 und DE 198 11 648 A1 offenbaren Verfahren zur thermischen Hydrolyse und zum Zellaufschluss von organischem Material.

Aufgabe der Erfindung ist es, eine Vorrichtung und ein Verfahren zur thermischen Hydrolyse von organischer Masse bereitzustellen, die eine Senkung des primären Energiebedarfs ermöglichen und gleichzeitig betriebssicher, umsatzstark und kostengünstig in der Konstruktion und im Betrieb sind.

Diese Aufgabenstellung wird mit einer Verfahren zur thermischen Hydrolyse von Klärschlamm gemäß Anspruch 1 gelöst.

Die Vorrichtung zur thermischen Hydrolyse von organischer Masse umfasst ein Heizelement und ein Kühlelement, um den Klärschlamm zu erwärmen bzw. abzukühlen, wobei als Heizelement und Kühlelement jeweils Wärmetauscher vorgesehen sind, in denen Wärme zwischen dem Klärschlamm und einem Medium getauscht wird, und wobei der Klärschlamm und das Medium in den Wärmetauschern voneinander getrennt sind.

Im Folgenden ist mit organischer Masse stets Klärschlamm gemeint.

Die im Folgenden verwendete Formulierung, dass ein Bauelement zwischen zwei anderen Bauelementen vorgesehen ist, schließt nicht aus, dass auch noch andere Bauelemente zwischen den beiden Bauelementen vorgesehen sind.

Durch die Trennung des Mediums und der organischen Masse in den Wärmetauschern für Heiz- und Kühlelement kann sowohl auf der Kühlseite, wie auch auf der Heizseite der Vorrichtung eine Entkopplung der Drücke zwischen dem Medium und der organischen Masse erreicht werden. Damit kann sowohl in der organischen Masse, als auch im Medium der optimal geeignete Druck eingestellt werden, um ein möglichst effizientes Verfahren zu ermöglichen.

Weiterhin kann das Medium unabhängig von der organischen Masse in geeigneter Form ausgewählt werden, so dass ein kostengünstiges und effizientes Heizen und Kühlen der organischen Masse möglich ist. Weiterhin kann durch geeignete Auswahl des Mediums bewirkt werden, dass im Wärmetauscher auf Seiten des Mediums keine Gefahr der Verkrustung besteht. Dadurch ergeben sich zusätzliche konstruktive Freiheiten für die Ausgestaltung der Wände, die der organischen Masse zugewandt sind, so dass Verkrustungen durch geeignete geometrische Gestaltung vermieden werden können.

Durch die zusätzlichen konstruktiven Freiheiten für die Ausgestaltung der Wände in den Wärmetauschern können die Wärmetauscher so ausgelegt werden, dass eine bessere Durchströmbarkeit hinsichtlich der organischen Masse erreicht werden kann. Da das Medium im Gegensatz zur organischen Masse nicht thixotrop ist, tritt keine Verstopfung des Wärmetauschers auf, auch wenn zeitweilig keine Wärme rückgeführt wird.

Im erhitzten organischen Material findet ein Hydrolyseprozess statt, wodurch Zellen und Zellklumpen aufgebrochen und löslich gemacht und der Faulung leichter zugänglich gemacht werden. Damit kann ein höheres Potenzial für die Umwandlung der organischen Masse und für die Stabilisierung erreicht werden. Aufgelöste bzw. hydrolysierte organische Feststoffe faulen vollständiger aus, als dies bei kompakten, nicht aufgeschlossenen Zellen der Fall ist. Der Aufschluss des zellulären organischen Materials erhöht sich mit dem Grad der Hydrolysierung, so dass die separat vorgesehenen, spezialisierten Heiz- und Kühlelemente gemäß des Gegenstands des ersten Anspruchs eine genau geregelte, hoch effiziente Hydrolyse ermöglichen.

In einem Ausführungsbeispiel ist das Medium eine Flüssigkeit, wobei diese vorteilhafterweise eine hohe Wärmekapazität aufweist und einfach zu fördern ist.

Die Förderung des Mediums wird vorteilhafterweise durch eine Pumpe erreicht, die das Medium in einem Kreislauf zwischen Heizelement und Kühlelement fördert, wodurch in einfacher Weise Wärme vom Kühlelement zum Heizelement gefördert wird und in den jeweiligen Wärmetauschern Wärme der organischen Masse zugeführt bzw. von dieser abgeführt wird.

Weiterhin ist eine Drossel funktional zwischen dem Heizelement und Kühlelement vorgesehen sein. Die Drossel ermöglicht eine schnelle Druckentspannung der organischen Masse unter Freisetzung von Entspannungsdampf und Hydrolysegas. Dies fördert die Desintegration der organischen Masse, indem die Zerstörung der Zellwände, der in der organischen Masse vorhandenen Zellen bewirkt wird, sowie größere Partikel zerkleinert werden. Die so behandelte organische Masse kann einfacher in einem Faultank oder Ähnlichem verwertet werden, da der biologische Zersetzungsprozess schneller voranschreiten kann. Die Drossel kann als Blende, Drosselventil oder in beliebiger anderer Bauform ausgeführt sein. Insbesondere ist es auch möglich, dass der Drosseleffekt nur mittels der Leitung der organischen Masse erzielt wird, indem insbesondere durch eine Aufweitung der Leitung der Druck der organischen Masse reduziert wird.

Weiterhin kann ein Entspannungstank nach der Drossel vorgesehen sein, in dem Entspannungsdampf von dem organischen Material abgeführt werden kann. Damit kann der nötige Raum für eine effiziente und schlagartige Entspannung des organischen Materials geschaffen werden.

Vorteilhafterweise kann sich an dem Entspannungstank ein Entspannungstankventil anschließen, das ausgelegt ist, um den Druck im Entspannungstank zu regeln. Dadurch kann im Entspannungstank der Druck genau so eingestellt werden, dass eine effiziente Hydrolyse bei genau geregeltem Durchfluss erreicht werden kann.

Ein Hydrolysereaktor für die organische Masse ist funktional zwischen dem Heizelement und der Drossel vorgesehen. Der Hydrolysereaktor ermöglicht eine weitere Erwärmung der organischen Masse, so dass diese auf die gewünschte Hydrolysetemperatur gebracht werden kann. Der Hydrolyseprozess kann somit bei idealer Temperatur stattfinden. Der Hydrolysereaktor ist ein indirekter Wärmetauscher, der insbesondere von einem extern erhitzten Wärmemittel durchströmt wird, das in einer zusätzlichen Wärmequelle erwärmt wird. Insbesondere handelt es sich bei dem extern erhitzten Wärmemittel um Thermalöl.

An den Hydrolysereaktor kann sich funktional ein Speicher für die organische Masse anschließen, der vor der Drossel vorgesehen ist, und in dem die organische Masse für eine gewisse Zeit auf Hydrolysetemperatur gehalten werden kann, bevor eine Entspannung in der Drossel stattfindet.

In einer Ausführungsform kann ein Zusatzkühlelement für die organische Masse funktional zwischen dem Hydrolysereaktor und der Drossel vorgesehen sein. Das Zusatzkühlelement ist mittels eines ersten Zusatzzweiges im Kreislauf des Mediums mit dem Kühlelement und Heizelement thermisch gekoppelt. Dadurch kann effizient Wärme der noch erhitzten organischen Masse zurückgeführt werden, bevor diese durch die schlagartige Entspannung in der Drossel abkühlt. Somit wird die Energieeffizienz der Vorrichtung erhöht, da mehr Wärme zurückgeführt werden kann und weniger primäre Energie verbraucht wird. Das Zusatzkühlelement erlaubt, dass die Entspannungstemperatur im Entspannungstank unabhängig von der Hydrolysetemperatur eingestellt werden kann. Damit kann das Hydrolyseergebnis optimiert werden, während gleichzeitig der thermische Nettoenergiebedarf, d.h. die von außen eingebrachte thermische Energie, reduziert werden kann.

In einer Ausführungsform kann ein Zusatzheizelement für die organische Masse funktional zwischen dem Heizelement und dem Hydrolysereaktor vorgesehen sein. Das Zusatzkühlelement und das Zusatzheizelement sind mittels des ersten Zusatzzweiges im Kreislauf des Mediums thermisch gekoppelt. Durch die zweistufige Vorerwärmung mittels Heizelement und Zusatzheizelement kann eine gestufte Erwärmung der organischen Masse erreicht werden, so dass die jeweiligen Wärmetauscher jeweils genau für den jeweiligen Temperaturbereich ausgelegt werden können. Dabei wird in dem Zusatzheizelement durch die direkte thermische Kopplung mit dem Zusatzkühlelement eine höhere Temperatur als im Heizelement erreicht. Die Stellung des Heizmischventils beeinflusst den thermischen Nettoenergiebedarf des Systems signifikant und bietet somit die Möglichkeit, in Abhängigkeit der Parameter des Gesamtverfahrens, jeweils die Wärmeverteilung zwischen Hydrolysereaktor und Entspannungstank optimal einzustellen. Dies kann durch eine aktive Regelung während des Betriebs der Anlage geschehen.

Der Durchfluss durch den ersten Zusatzzweig des Kreislaufes kann durch ein Heizmischventil geregelt werden, so dass zusätzliche Möglichkeiten der Feinregelung der Temperaturen geschaffen werden, insbesondere die Regelung des relativen Temperaturunterschieds zwischen dem Hydrolysereaktor und dem Entspannungstank.

Weiterhin kann eine Pumpe für die organische Masse funktional vor dem Heizelement vorgesehen sein. Dadurch kann das organische Material einfach auf einen hohen Druck gebracht werden, der die Effizienz der Hydrolyse steigert und einen hohen Druckabfall in der Drossel ermöglicht.

Vorteilhafterweise kann ein Kondensationstank für die organische Masse funktional nach dem Kühlelement vorgesehen sein, in dem der Entspannungsdampf auskondensieren kann, so dass die organische Masse inklusive der auskondensierten Bestandteile weiter behandelt werden kann.

Die noch bestehende gasförmige Phase der organischen Masse kann aus dem Kondensationstank über ein Kondensationstankgasventil abgeführt werden, so dass die gasförmige Phase und die fließfähigen Bestandteile der organischen Masse getrennt weiterbehandelt werden können, wodurch die Weiterbehandlung effizienter wird als für einen zweiphasiges Gemisch. Das Kondensationstankgasventil dient der Regelung des Drucks im Kondensationstank.

Nach dem Kondensationstank kann ein Kondensatkühlelement vorgesehen sein, um die organische Masse weiter zu kühlen. Dies ermöglicht eine Regelung der Temperatur im Kondensationstank, da sowohl die Kühlung vor dem Kondensationstank mittels des Kühlelements, als auch die Kühlung nach dem Kondensationstank mittels des Kondensatkühlelements geregelt werden kann.

Vorteilhafterweise ist das Kondensatkühlelement mit dem Heizelement und dem Kühlelement mittels eines zweiten Zusatzzweiges des Kreislaufes des Mediums thermisch gekoppelt, wobei ein Kühlmischventil vorgesehen sein kann, das ausgelegt ist, die Verteilung des Mediums auf Kühlelement und Kondensatkühlelement zu regeln. Mittels dieser Anordnung ist eine effiziente Regelung der Verteilung der Kühlleistung auf das Kühlelement und Kondensatkühlelement möglich. Gewöhnlicherweise wird im Kühlmischventil eine Stromteilung im Verhältnis 1:1 eingestellt. Dennoch können in Abhängigkeit der im Entspannungstank vorliegenden und im Kondensationstank gewünschten Temperaturen auch andere Teilungsverhältnisse des Mediums im Kühlmischventil eingestellt werden. Insbesondere kann auch eine aktive Regelung des Kühlmischventils in Abhängigkeit der übrigen Verfahrensparameter implementiert werden.

Weiterhin kann ein Entspannungstankgasventil vorgesehen sein, um die gasförmige Phase aus dem Entspannungstank abzuführen und insbesondere dem Kondensationstank zuzuführen. Dadurch kann der Entspannungsdampf an dem Kühlelement vorbeigeleitet werden. Dies ist vorteilhaft, da ein zweiphasiges Gemisch im Kühlelement eine geringere Kühlleistung bedingen würde. Somit kann durch dieses Merkmal die Kühleffizienz des Kühlelements gesteigert werden. Weiterhin dient das Entspannungstankgasventil der Regelung des Drucks im Entspannungstank.

In einer Ausführungsform kann eine Rückführungsleitung für die organische Masse mit einem Rückführventil vorgesehen sein, wobei das Rückführventil ausgelegt ist, den Durchsatz der Rückführungsleitung zu regeln. Mittels dieses Ventils kann beispielsweise ein Rezirkulationsstrom eingestellt werden und so die Nettodurchsatzleistung der Anlage geregelt werden. Weiterhin bietet die Rückführungsleitung die Möglichkeit, eine automatische Reinigung durchzuführen, indem Reinigungsflüssigkeiten im Kreis gepumpt werden, um so das System von Ablagerungen der organischen Masse zu reinigen.

Das erfindungsgemäße Verfahren zur thermischen Hydrolyse von organischer Masse umfasst, dass die organische Masse auf Hydrolysetemperatur erwärmt und anschließend von der Hydrolysetemperatur abgekühlt wird, wobei wenigstens ein Teil der Erwärmung und Abkühlung mittels jeweils eines Wärmetauschers erfolgt, in dem Wärme zwischen der organischen Masse und einem Medium getauscht wird, während die organische Masse und das Medium in den Wärmetauschern voneinander getrennt sind.

Durch die Trennung der organischen Masse und des Mediums wird ein effizientes Verfahren mit den Vorteilen der bereits oben beschriebenen Vorrichtung bereitgestellt.

Weiterhin kann sich das Verfahren dadurch auszeichnen, dass die organische Masse kontinuierlich gefördert wird, wodurch eine hohe Förderleistung und eine hohe betriebswirtschaftliche Effizienz der Anlage erreicht werden kann.

Im Folgenden wird eine bevorzugte Ausführungsform der erfindungsgemäßen Vorrichtung und des erfindungsgemäßen Verfahrens anhand der folgenden Figuren beschrieben:
Figur 1 zeigt eine Ausführungsform der Erfindung,
Figur 2 zeigt eine zweite Ausführungsform der Erfindung.

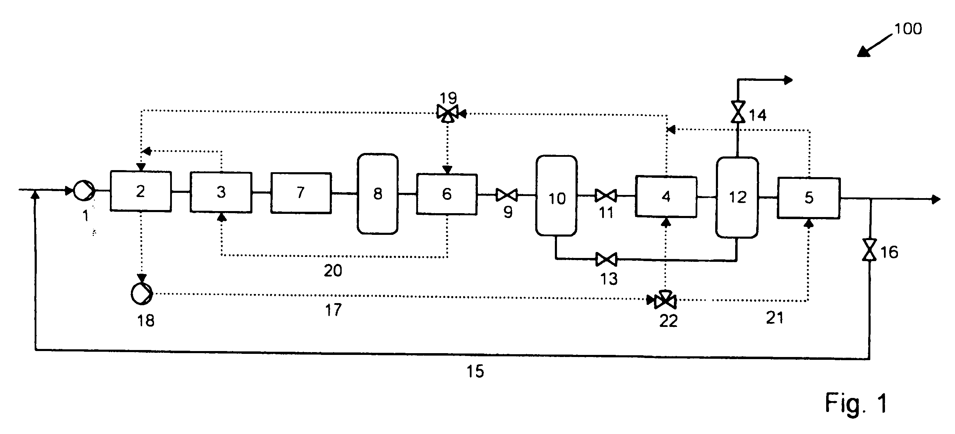

Die in Figur 1 schematisch dargestellte erfindungsgemäße Vorrichtung 100 ist wie folgt aufgebaut. Eine Zuleitung für organische Masse, d.h. Rohschlamm, ist mit einer Hochdruckpumpe 1 verbunden. Über eine weitere Leitung ist die Hochdruckpumpe 1 mit einem Heizelement 2 verbunden. Bei dem Heizelement 2 handelt es sich um ein von einem Medium, in diesem Fall Wasser, durchströmten indirekten Wärmetauscher. Somit ist der Durchfluss von erhitztem Wasser, der mit der gepunkteten Linie dargestellt ist, vollkommen vom Durchfluss der organischen Masse, der mit der durchgezogenen Linie dargestellt ist, entkoppelt. Es findet lediglich eine Übertragung von Wärme an den Grenzflächen des Wärmetauschers statt.

An das Heizelement 2 ist mittels einer Leitung ein Zusatzheizelement 3 angeschlossen, das ebenfalls durch einen indirekten Wärmetauscher gebildet wird, der einerseits von der organischen Masse und andererseits vom Medium durchströmt wird. Eine Erwärmung des Mediums findet in den Kühlelementen 4, 5 und 6 statt, die alle als indirekte Wärmetauscher zwischen dem Medium und der organischen Masse ausgeführt sind.

Das Zusatzheizelement 3 ist mit einer Leitung mit dem Hydrolysereaktor 7 verbunden, wobei in diesem Energie von außerhalb des Systems zugeführt wird, um die organische Masse zusätzlich zu erhitzen. Der Hydrolysereaktor 7 kann als Rohrreaktor ausgeführt sein, worin die organische Masse mittels extern erhitztem Thermalöl weiter erwärmt wird. Der Hydrolysereaktor ist mit einer Rohrleitung an einen Speicher 8 angeschlossen, der ein gewisses Volumen aufweist, so dass die organische Masse für eine bestimmte Verweildauer gehalten wird, damit die Hydrolyse möglichst weit voranschreitet. Im Speicher 8 herrscht ein hoher Druck und eine hohe Temperatur.

Der Speicher 8 ist mit einer Leitung mit dem Zusatzkühlelement 6 verbunden, in dem die organische Masse mittels dem Medium gekühlt wird. An das Zusatzkühlelement 6 schließt sich eine Drossel an, die hier als Drosselventil 9 ausgeführt ist, das direkt in einen Entspannungstank 10 mündet. Dadurch wird die organische Masse schlagartig entspannt. Durch den schnellen Druckabfall kommt es zum Sieden innerhalb der organischen Masse, wodurch beispielsweise Zellen in der organischen Masse zum Platzen gebracht werden, da in deren Inneren der Druck stark ansteigt. Das Drosselventil 9 kann verstellbar und regelbar sein.

Vom Entspannungstank 10 führt eine Leitung mit einem Entspannungstankventil 11 zum Kühlelement 4. Das Entspannungstankventil 11 ist ein regelbares Ventil und ist ausgelegt, den Druck im Entspannungstank 10 optimal einzustellen. Das Entspannungstankventil 11 kann alternativ auch durch eine frequenzgesteuerte Pumpe ergänzt werden, um den Druckverlust in den nachfolgenden Wärmetauschern auszugleichen.

Das Kühlelement 4 ist mit einer Leitung für die organische Masse mit einem Kondensationstank 12 verbunden. Alternativ dazu ist der Entspannungstank 10 auch über ein Entspannungstankgasventil 13 mit dem Kondensationstank 12 verbunden, wobei über das Entspannungstankgasventil 13 gasförmige Bestandteile der organischen Masse am Kühlelement 4 vorbei zum Kondensationstank 12 geleitet werden. Der Kondensationstank 12 ist mit einer Leitung für die organische Masse mit dem Kondensatkühlelement 5 verbunden. Vom Kondensatkühlelement 5 wird die organische Masse zu einem nicht dargestellten Faulturm geleitet. Am Kondensationstank 12 ist weiterhin ein Kondensationstankgasventil 14 vorgesehen, das gasförmige Bestandteile aus dem Kondensationstank 12 direkt zum Faulturm leitet.

Weiterhin weist die Vorrichtung eine Rückführungsleitung 15 für die organische Masse auf, die mit einem Rückführventil 16 versehen ist. Die Rückführungsleitung führt die organische Masse, die bereits die Vorrichtung durchlaufen hat, zurück vor die Pumpe 1.

Für das Medium, das in den Heizelementen 2, 3 die organische Masse erwärmt und in den Kühlelementen 4, 5, 6 die organische Masse kühlt, ist ein Kreislauf 17 vorgesehen, der aus Leitungen besteht, die in Figur 1 mit gepunkteten Linien dargestellt sind. Eine Pumpe 18 fördert dabei das Medium. Innerhalb des Kreislaufes 17 ist ein Heizmischventil 19 vorgesehen, mit dem geregelt werden kann, wie groß der Anteil des Mediums ist, der durch einen ersten Zusatzzweig 20 fließt. Im ersten Zusatzzweig 20 wird das Medium im Zusatzkühlelement 6 unter Kühlung der organischen Masse erhitzt, und im Zusatzheizelement 3 unter Erhitzung der organischen Masse gekühlt. Der erste Zusatzzweig 20 mündet vor dem Heizelement 2 wieder in den Hauptkreislauf.

Weiterhin weist der Kreislauf 17 einen zweiten Zusatzzweig 21 auf, wobei der Anteil des Mediums, der durch den zweiten Zusatzzweig 21 fließt, durch das Kühlmischventil 22 geregelt wird. Der zweite Zusatzzweig 21 fließt durch das Kondensatkühlelement 5, wobei darin das Medium unter Kühlung der organischen Masse erwärmt wird. Der zweite Zusatzzweig 21 mündet nach dem Kühlelement 4 wieder in den Hauptkreislauf.

Im Folgenden wird das erfindungsgemäße Verfahren anhand von Figur 1 beschrieben.

Zunächst wird die etwa unter Normaltemperatur und Normaldruck stehende organische Masse, d.h. der Rohschlamm, der Hochdruckpumpe 1 zugeführt, die den erforderlichen Systemdruck für die thermische Hydrolyse erzeugt. Die erforderliche Druckerhöhung setzt sich zusammen aus dem Dampfdruck des Rohschlamms bei der gewählten Hydrolysetemperatur, den Druckverlusten in den nachfolgenden Wärmetauschern und einem Sicherheitszuschlag, um das Sieden des Rohschlammes bei der gewählten Hydrolysetemperatur zu vermeiden. Bei einer gewählten maximalen Hydrolysetemperatur von 170°C und einer angenommenen dynamischen Viskosität des Rohschlammes von 150 mPas ergibt sich ein Dampfdruck des Rohschlammes bei der maximalen Hydrolysetemperatur von ca. 8 bar und ein Druckverlust in den Wärmetauschern von ca. 6 bar. Der Sicherheitszuschlag wird auf 2 bar festgesetzt. Damit ergibt sich ein Förderdruck der Hochdruckpumpe 1 für den Rohschlamm vom mindestens 16 bar.

Der nun unter Druck gesetzte Rohschlamm wird über das Heizelement 2 und das Zusatzheizelement 3 zunächst vorgewärmt. Dies geschieht durch Nutzung der Abwärme, die bei der Rückkühlung des Hydrolysats über das Kühlelement 4, das Kondensatkühlelement 5 und das Zusatzkühlelement 6 gewonnen wird. Die endgültige Hydrolysetemperatur wird im Hydrolyse-Reaktor 7 erreicht, der als Wärmetauscher mit einem extern erhitzten Wärmemittel, insbesondere Thermalöl, ausgebildet ist. Das Thermalöl wird von einer zusätzlichen Heizeinrichtung auf die gewünschte Temperatur gebracht und daraufhin durch den Hydrolyse-Reaktor 7 geleitet, wobei darin die organische Masse auf die gewünschte Hydrolysetemperatur gebracht wird.

Um die erforderliche Hydrolysezeit zu erreichen, die sich deutlich von der hydraulischen Aufenthaltszeit im Hydrolyse-Reaktor 7 unterscheidet, ist diesem der Speicher 8 nachgeschaltet, der so dimensioniert ist, dass die gewählte Hydrolysezeit jederzeit sicher eingehalten wird. So beträgt die hydraulische Aufenthaltszeit im Hydrolyse-Reaktor 7 lediglich etwas mehr als 30 Sekunden, wohingegen die Hydrolysezeit insgesamt mehr als 30 Minuten beträgt. Der Speicher 8 ist so ausgeführt, dass einerseits das gebildete Hydrolysegas entweichen kann und andererseits sich eventuell absetzende Feststoffe nicht im Speicher 8 akkumulieren und so das verfügbare Speichervolumen unkontrolliert verkleinern.

Nach Passage des Speichers 8 tritt die organische Masse in das Zusatzkühlelement 6 ein, das die Temperatur der unter Druck stehenden organischen Masse absenkt.

Dann tritt das organische Material durch das Drosselventil 9, wobei die schlagartige Entspannung eine Zerstörung der Zellwände der in der organischen Masse vorhandenen Zellen bewirkt. Die dabei frei werdende Verdampfungsenergie senkt die Temperatur der organischen Masse entsprechend ab.

Um einen optimalen Entspannungsvorgang zu erreichen, ist der Entspannungstank 10 vorgesehen, der sich direkt an das Drosselventil 9 anschließt und der den nötigen Raum für die Entspannung der organischen Masse bereitstellt.

Die flüssige Phase der organischen Masse wird vom Entspannungstank 10 über das Entspannungstankventil 11 und das Kühlelement 4 zu dem Kondensationstank 12 geleitet. Hingegen wird die gasförmige Phase, d.h. der Entspannungsdampf, vom Entspannungstank 10 unter Umgehung des Kühlelements 4 über das Entspannungstankgasventil 13 zum Kondensationstank 12 geleitet. Durch die Trennung der gasförmigen und flüssigen Phase der organischen Masse nach dem Entspannungstank 10 kann eine effiziente Kühlung im Kühlelement 4 ermöglicht werden.

Im Kondensationstank 12 wird der Entspannungsdampf mit der bereits über das Kühlelement 4 gekühlten organischen Masse gewaschen und dadurch kondensiert. Verbleibende gasförmige Bestandteile im Kondensationstank 12 können über das Kondensationstankgasventil 14 direkt einem nicht dargestellten Faulturm zugeführt werden. Die flüssigen Bestandteile der organischen Masse werden nach dem Kondensationstank 12 über das Kondensatkühlelement 5 weiter gekühlt und dann dem Faulturm zugeführt.

Über die Rückführungsleitung 15 und das Rückführventil 16 kann zum Ausgleich eventuell diskontinuierlich anfallender anfänglicher Mengen der organischen Masse zumindest ein Teil der organischen Masse zurückgeführt werden und so ein kontinuierlicher Betrieb der Anlage aufrecht erhalten werden. Zudem ermöglicht die Rückführungsleitung 15 eine Reinigungsflüssigkeit durch die Anlage im Kreis zu fahren und damit eventuelle Verkrustungen durch die organische Masse in der Anlage zu entfernen.

Der Kreislauf 17 leitet ein wärmetransportierendes Medium, insbesondere Wasser, über eine Pumpe 18 durch die verschiedenen Heizelemente 2, 3 und Kühlelemente 4, 5, 6, die alle als indirekte Wärmetauscher ausgeführt sind. Damit wird Wärme der bereits hydrolysierten organischen Masse zur noch nicht hydrolysierten organischen Masse zurückgeführt, um ein energieeffizientes System zu ermöglichen, das eine im Vergleich zu anderen im Stand der Technik bekannten Systemen geringere zugeführte Wärmeleistung benötigt. Der Kreislauf 17 ist so ausgelegt, dass das Medium an keiner Stelle verdampft, damit das Medium eine möglichst hohe Wärmetransportleistung aufweist.

Weiterhin ermöglicht eine Entkopplung des Mediums im Kreislauf 17 von der organischen Masse, dass der Druck der organischen Masse an jede Stelle der Vorrichtung so eingestellt werden kann, wie es die optimalen Verfahrensbedingungen erfordern, wodurch die Effizienz der Hydrolyse der organischen Masse gesteigert werden kann.

Der Kreislauf 17 des Mediums weist weiterhin das Heizmischventil 19 auf, das einen Teil des Mediums in den ersten Zusatzzweig 20 leitet, wodurch das Zusatzkühlelement 6 und Zusatzheizelement 3 durchströmt werden. Damit wird im ersten Züsatzzweig 20 durch das Zusatzkühlelement 6 eine höhere Temperatur des Mediums erreicht, die für die Erhitzung der organischen Masse im Zusatzheizelement 3 verwendet werden kann. Durch das Zusatzkühlelement 6 und das Zusatzheizelement 3, die über den ersten Zusatzzweig 20 in direkter Verbindung stehen, kann der Primärenergiebedarf der Anlage weiter gesenkt werden, ohne dass dies Auswirkungen auf das Hydrolyseergebnis hat. Dabei wird der Fluss durch den ersten Zusatzzweig 20 durch das Heizmischventil 19 gemäß den Anforderungen des Prozesses geregelt.

Weiterhin weist der Kreislauf 17 den zweiten Zusatzzweig 21 auf, der einen Teil des Mediums in das Kondensatkühlelement 5 nach dem Kondensationstank 12 abzweigt. Die Menge des in den zweiten Zusatzzweig 21 abgeführten Mediums wird mittels des Kühlmischventils 22 geregelt. Mittels des Kühlmischventils 22 ist es somit möglich, die Temperatur im Kondensationstank 13 zu regeln, um darin die gewünschten Bedingungen für eine eventuelle Freigabe von gelösten Gasen in der organischen Masse zu schaffen.

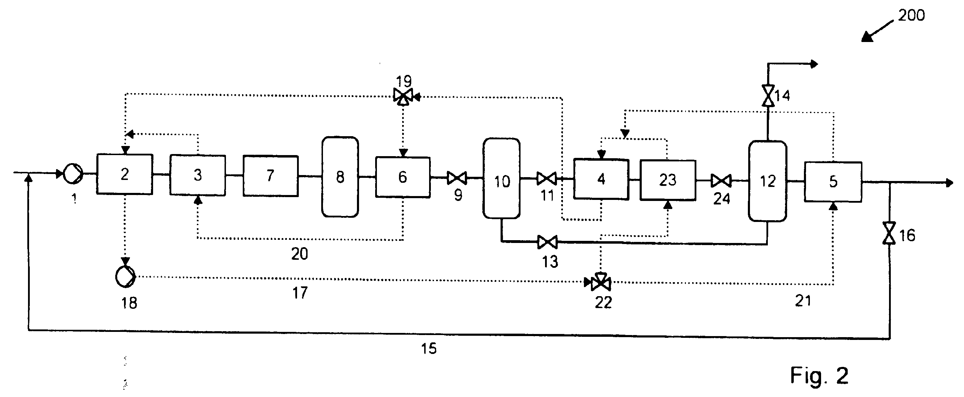

In Figur 2 ist eine zweite Ausführungsform der erfindungsgemäßen Vorrichtung 200 zur thermischen Hydrolyse von organischer Masse dargestellt. Im Wesentlichen unterscheidet sich diese Ausführungsform bezüglich der Kühlung der organischen Masse. Das Kühlelement 4 ist mit einer Leitung für die organische Masse zu einem zweiten Kühlelement 23 versehen. An das zweite Kühlelement 23 schließt sich eine Leitung mit einem Ventil 24 zum Kondensationstank 12 an. Der wesentliche Unterschied dieser Vorrichtung zur ersten Ausführungsform ist, dass sowohl der Hauptkreislauf 17, als auch der erste Zusatzzweig 21 des Mediums an das Kühlelement 4 angeschlossen sind, und somit das gesamte Medium durch das Kühlelement 4 gefördert wird.

Mittels dem Kühlmischventil 22 ist einstellbar, welcher Anteil der Kühlung der organischen Masse vor bzw. nach dem Kondensationstank 12 stattfinden soll. Das Ventil 24 ist dazu ausgelegt, den Druck bzw. Durchfluss in den Kühlelementen 4 und 23 zu regeln, so dass in diesen ein optimaler Wärmetausch zwischen der organischen Masse und dem Medium stattfinden kann.

Da das Medium einzig für den Zweck des Wärmetransports verwendet wird, kann ein speziell dafür ausgewähltes Medium wie z.B. Wasser oder eine andere Flüssigkeit mit hoher Wärmekapazität ausgewählt werden. Weiterhin kann das Medium so ausgewählt werden, dass geringe Anforderungen an die Gestaltung der daran angrenzenden Grenzflächen der Wärmetauscher gestellt werden. Dadurch wird zusätzliche Gestaltungsfreiheit in den Wärmetauschern hinsichtlich der darin geformten Durchflüsse für die organische Masse ermöglicht, so dass die Durchflüsse für die organische Masse mit großen Querschnitten ausgelegt werden können, damit sich keine kritischen Verkrustungen bilden.

Weiterhin können die Wärmetauscherflächen auf der Seite der organischen Masse so ausgelegt sein, dass sich daran Turbulenzen bilden, die einer Verkrustungsgefahr ebenfalls entgegenwirken, insbesondere durch das Vorsehen von mechanischen Einsätzen. Die Wärmetauscherflächen können so ausgelegt werden, dass nur eine geringe Temperaturdifferenz zwischen dem Medium und der geheizten organischen Masse notwendig ist, um so lokale Überhitzungen zu minimieren, die die Siedeneigung der organischen Masse erhöhen. Auch dadurch können wirksam Verkrustungen vermieden werden.

Die Erzeugung der notwendigen Prozesswärme durch den Hydrolyse-Reaktor 7 kann extern über ein Thermalöl oder einem Dampfkessel erfolgen. Der Vorteil der Verwendung eines Thermalöls liegt im Wegfall einer Kesselspeisewasseraufbereitung, wie sie beim Dampfkessel erforderlich ist. Vorteilhaft bei der Verwendung eines Dampfkessels ist die hohe Wärmekapazität von Heißwasser als Wärmemittel im Hydrolyse-Reaktor 7. Beim Hydrolyse-Reaktor 7 handelt es sich ebenfalls um einen indirekten Wärmetauscher.

Insgesamt wird darauf hingewiesen, dass sowohl die Förderleistung der Pumpen 1, 18 regelbar sein kann, als auch dass sämtliche Ventile 9, 11, 13, 14, 16, 24 und Verteilerventile 19, 22 separat regelbar sein können, um Einfluss auf die Prozessparameter des Verfahrens nehmen zu können.

## Patentansprüche

1. Verfahren zur thermischen Hydrolyse von Klärschlamm, wobei ein Heizelement (2) und ein Kühlelement (4) vorgesehen sind, um den Klärschlamm zu erwärmen bzw. abzukühlen, wobei als Heizelement (2) und Kühlelement (4) jeweils indirekte Wärmetauscher vorgesehen sind, in denen Wärme zwischen dem Klärschlamm und einem Medium getauscht wird, und wobei der Klärschlamm und das Medium in den Wärmetauschern voneinander getrennt sind,
**dadurch gekennzeichnet,**
**dass** eine Drossel (9) funktional zwischen dem Heizelement (2) und Kühlelement (4) vorgesehen ist, und
**dass** ein Hydrolyse-Reaktor (7) für den Klärschlamm funktional zwischen dem Heizelement (2) und der Drossel (9) vorgesehen ist, in dem der Klärschlamm auf Hydrolysetemperatur gebracht wird, wobei der Hydrolyse-Reaktor (7) ein indirekter Wärmetauscher ist, der von einem extern erhitzten Wärmemittel durchströmt wird.

2. Verfahren gemäß Anspruch 1, **dadurch gekennzeichnet, dass** das Medium eine Flüssigkeit ist.

3. Verfahren gemäß Anspruch 2, **dadurch gekennzeichnet, dass** eine Pumpe (18) vorgesehen ist, um das Medium in einem Kreislauf (17) zwischen Heizelement (2) und Kühlelement (4) zu fördern.

4. Verfahren gemäß einem der vorangehenden Ansprüche, **dadurch gekennzeichnet, dass** ein Entspannungstank (10) nach der Drossel (9) vorgesehen ist.

5. Verfahren gemäß Anspruch 4, **dadurch gekennzeichnet, dass** sich an den Entspannungstank (10) ein Entspannungstankventil (11) anschließt, das ausgelegt ist, um den Druck im Entspannungstank (10) zu regeln.

6. Verfahren gemäß einem der vorangehenden Ansprüche, **dadurch gekennzeichnet, dass** ein Speicher (8) für den Klärschlamm funktional zwischen dem Hydrolyse-Reaktor (7) und der Drossel (9) vorgesehen ist.

7. Verfahren gemäß Anspruch 3, **dadurch gekennzeichnet, dass** ein Zusatzkühlelement (6) funktional zwischen dem Hydrolyse-Reaktor (7) und der Drossel (9) vorgesehen ist, wobei das Zusatzkühlelement (6) mittels eines ersten Zusatzzweigs (20) mit dem Kreislauf (17) des Mediums thermisch gekoppelt ist.

8. Verfahren gemäß Anspruch 7, **dadurch gekennzeichnet, dass** ein Zusatzheizelement (3) für den Klärschlamm funktional zwischen dem Heizelement (2) und dem Hydrolysereaktor (7) vorgesehen ist, wobei das Zusatzheizelement (3) mittels des ersten Zusatzzweiges (20) mit dem Kreislauf (17) des Mediums thermisch gekoppelt ist.

9. Verfahren gemäß Anspruch 7 oder 8, **dadurch gekennzeichnet, dass** der Durchfluss durch den ersten Zusatzzweig (20) mittels eines Heizmischventils (19) geregelt werden kann.

10. Verfahren gemäß einem der vorangehenden Ansprüche, **dadurch gekennzeichnet, dass** eine Pumpe (1) für den Klärschlamm funktional vor dem Heizelement (2) vorgesehen ist.

11. Verfahren gemäß einem der vorangehenden Ansprüche, wenn dieser von Anspruch 3 abhängig ist, **dadurch gekennzeichnet, dass** ein Kondensationstank (12) für den Klärschlamm funktional nach dem Kühlelement (4) vorgesehen ist.

12. Verfahren gemäß Anspruch 11, **dadurch gekennzeichnet, dass** ein Kondensationstankgasventil (14) vorgesehen ist, um den Abfluss der gasförmigen Phase des Klärschlamms aus dem Kondensationstank (12) zu regeln, sodass die gasförmige Phase und fließfähige Bestandteile des Klärschlamms getrennt abgeführt werden können.

13. Verfahren gemäß Anspruch 11 oder 12, **dadurch gekennzeichnet, dass** ein Kondensatkühlelement (5) nach dem Kondensationstank (12) vorgesehen ist, das ausgelegt ist, den Klärschlamm zu kühlen.

14. Verfahren gemäß Anspruch 13, **dadurch gekennzeichnet, dass** das Kondensatkühlelement (5) mit dem Heizelement (2) und dem Kühlelement (4) mittels eines zweiten Zusatzzweiges (21) des Kreislaufes (17) des Mediums thermisch gekoppelt ist, wobei ein Kühlmischventil (22) vorgesehen ist, dass ausgelegt ist, die Verteilung des Mediums auf das Kühlelement (4) und Kondensatkühlelement (5) zu regeln.

15. Verfahren gemäß einem der Ansprüche 12 bis 14, wenn dieser von Anspruch 4 oder 5 abhängig ist, **dadurch gekennzeichnet, dass** ein Entspannungstankgasventil (13) vorgesehen ist, um Gas aus dem Entspannungstank (10) abzuführen und insbesondere dem Kondensationstank (12) zuzuführen.

16. Verfahren gemäß einem der vorangehenden Ansprüche, **dadurch gekennzeichnet, dass** eine Rückführungsleitung (15) für den Klärschlamm mit einem Rückführventil (16) vorgesehen ist, wobei das Rückführventil (16) ausgelegt ist, den Durchsatz der Rückführungsleitung (15) zu regeln.

17. Verfahren nach Anspruch 1, wobei der Klärschlamm auf Hydrolysetemperatur erwärmt und anschließend von der Hydrolysetemperatur abgekühlt wird, wobei das Erwärmen und Abkühlen mittels indirekten Wärmetauschern (2, 3, 4, 5, 6, 7) erfolgt, in denen Wärme zwischen dem Klärschlamm und einem Medium getauscht wird, während der Klärschlamm und das Medium in den Wärmetauschern (2, 3, 4, 5, 6, 7) voneinander getrennt sind.

18. Verfahren gemäß Anspruch 17, **dadurch gekennzeichnet, dass** Wärme zwischen den Wärmetauschern (2, 3, 4, 5, 6, 7) über das Medium übertragen wird.

19. Verfahren gemäß Anspruch 17 oder 18, **dadurch gekennzeichnet, dass** das Medium eine Flüssigkeit ist, die in einem Kreislauf (17) geführt wird.

20. Verfahren gemäß einem der Ansprüche 17 bis 19, **dadurch gekennzeichnet, dass** der Druck des Klärschlamms vor der Erwärmung erhöht wird.

21. Verfahren gemäß einem der Ansprüche 17 bis 20, **dadurch gekennzeichnet, dass** der erwärmte Klärschlamm hydrolysiert wird, indem diese in zwei Heizstufen auf Hydrolysetemperatur erwärmt wird.

22. Verfahren gemäß einem der Ansprüche 17 bis 20, **dadurch gekennzeichnet, dass** der Druck des erwärmten Klärschlamm schlagartig reduziert wird.

23. Verfahren gemäß Anspruch 22, **dadurch gekennzeichnet, dass** der Klärschlamm nach der schlagartigen Druckreduzierung einem Entspannungstank (10) zugeführt wird.

24. Verfahren gemäß Anspruch 22 oder 23, **dadurch gekennzeichnet, dass** der erwärmte Klärschlamm vor der schlagartigen Entspannung einem Speicher (8) zugeführt wird.

25. Verfahren gemäß einem der Ansprüche 17 bis 24, **dadurch gekennzeichnet, dass** der erwärmte Klärschlamm mittels dem Medium gekühlt wird, bevor der Druck des Klräschlamms schlagartig reduziert wird.

26. Verfahren gemäß einem der Ansprüche 17 bis 25, **dadurch gekennzeichnet, dass** aus dem hydrolysierten Klärschlamm nach einem zumindest teilweise erfolgten Abkühlen ein Teil der gasförmigen Phase abgeschieden wird.

27. Verfahren gemäß Anspruch 23, **dadurch gekennzeichnet, dass** wenigstens ein Teil der gasförmigen Phase des hydrolysierten Klärschlamms aus dem Entspannungstank (10) abgeschieden werden.

28. Verfahren gemäß Anspruch 23 oder 27, **dadurch gekennzeichnet, dass** der Klärschlamm nach dem Abscheiden der gasförmigen Phase weiter gekühlt wird.

29. Verfahren gemäß einem der Ansprüche 17 bis 28, **dadurch gekennzeichnet, dass** mindestens ein Teil des hydrolysierten Klärschlamms zum noch nicht hydrolysierten Klärschlamm rückgeführt wird.

30. Verfahren gemäß einem der Ansprüche 17 bis 29, **dadurch gekennzeichnet, dass** der Klärschlamm kontinuierlich gefördert wird.

## Claims

1. A method for thermal hydrolysis of sewage sludge, with a heating element (2) and a cooling element (4) being provided to heat up or cool down the sewage sludge, indirect heat exchangers being provided as heating element (2) and cooling element (4), which exchange heat between the sewage sludge and a medium, and the sewage sludge and the medium being separated from each other within the heat exchangers,
**characterized in that**
a throttle (9) is functionally provided between the heating element (2) and the cooling element (4), and
that the heating element (2) and the throttle (9) have functionally provided between them a hydrolysis reactor (7) for the sewage sludge, in which the sewage sludge is heated to the hydrolysis temperature, said hydrolysis reactor (7) being an indirect heat exchanger through which an externally heated heating medium flows.

2. The method according to claim 1, **characterized in that** the medium is a liquid.

3. The method according to claim 2, **characterized in that** a pump (18) is provided to supply the medium in a circuit (17) between the heating element (2) and the cooling element (4).

4. The method according to any of the preceding claims, **characterized in that** a decompression tank (10) is provided after the throttle (9).

5. The method according to claim 4, **characterized in that** the decompression tank (10) is followed by a decompression tank valve (11) configured to control the pressure within the decompression tank (10).

6. The method according to any of the preceding claims, **characterized in that** a storage means (8) for the sewage sludge is functionally provided between the hydrolysis reactor (7) and the throttle (9).

7. The method according to claim 3, **characterized in that** an additional cooling element (6) is functionally provided between the hydrolysis reactor (7) and the throttle (9), the additional cooling element (6) being thermally coupled to the circuit (17) of the medium via a first additional branch (20).

8. The method according to claim 7, **characterized in that** an additional heating element (3) for the sewage sludge is functionally provided between the heating element (2) and the hydrolysis reactor (7), the additional heating element (3) being thermally coupled to the circuit (17) of the medium via the first additional branch (20).

9. The method according to claim 7 or 8, **characterized in that** the flow through the first additional branch (20) can be controlled by means of a heating mixing valve (19).

10. The method according to any of the preceding claims, **characterized in that** a pump (1) for the sewage sludge is functionally provided before the heating element (2).

11. The method according to any of the preceding claims, provided that the respect claim depends on claim 3, **characterized in that** a condensation tank (12) for the sewage sludge is functionally provided after the cooling element (4).

12. The method according to claim 11, **characterized in that** a condensation tank gas valve (14) is provided to control the discharge of the gaseous phase of the sewage sludge from the condensation tank (12) so that the gaseous phase and fluid components of the sewage sludge can be discharged separately.

13. The method according to claim 11 or 12, **characterized in that** a condensate cooling element (5) is provided after the condensation tank (12) and is configured to cool the sewage sludge.

14. The method according to claim 13, **characterized in that** the condensate cooling element (5) is thermally coupled to the heating element (2) and the cooling element (4) via a second additional branch (21) of the circuit (17) of the medium, with a cooling mixing valve (22) being provided that is configured to control the distribution of the medium among the cooling element (4) and the condensate cooling element (5).

15. The method according to any of claims 12 to 14, provided that the respective claim depends on claim 4 or 5, **characterized in that** a decompression tank gas valve (13) is provided for discharging gas from the decompression tank (10) and in particular for supplying gas to the condensation tank (12).

16. The method according to any of the preceding claims, **characterized in that** a return pipeline (15) for the sewage sludge is provided with a return valve (16), the return valve (16) being configured to control the flow-rate through the return pipeline (15).

17. The method according to claim 1, wherein the sewage sludge is heated to the hydrolysis temperature and subsequently cooled down from the hydrolysis temperature, wherein heating and cooling is effected by means of indirect heat exchangers (2, 3, 4, 5, 6, 7), which exchange heat between the sewage sludge and a medium while the sewage sludge and the medium are separated from each other within the heat exchangers (2, 3, 4, 5, 6, 7).

18. The method according to claim 17, **characterized in that** heat is transferred between the heat exchangers (2, 3, 4, 5, 6, 7) via the medium.

19. The method according to claim 17 or 18, **characterized in that** the medium is a liquid that is guided within a circuit (17).

20. The method according to any of claims 17 to 19, **characterized in that** the pressure of the sewage sludge is increased prior to heating.

21. The method according to any of claims 17 to 20, **characterized in that** the heated sewage sludge is hydrolyzed by being heated to the hydrolysis temperature in two heating stages.

22. The method according to any of claims 17 to 20, **characterized in that** the pressure of the heated sewage sludge is abruptly reduced.

23. The method according to claim 22, **characterized in that** the sewage sludge is supplied to a decompression tank (10) after having been abruptly decompressed.

24. The method according to claim 22 or 23, **characterized in that** the heated sewage sludge is supplied to a storage means (8) before being abruptly decompressed.

25. The method according to any of claims 17 to 24, **characterized in that** the heated sewage sludge is cooled by means of the medium before the pressure of the sewage sludge is abruptly reduced.

26. The method according to any of claims 17 to 25, **characterized in that** a part of the gaseous phase is deposited from the hydrolyzed sewage sludge after said sewage sludge has been cooled down at least partially.

27. The method according to claim 23, **characterized in that** at least a part of the gaseous phase of the hydrolyzed sewage sludge is deposited from the decompression tank (10).

28. The method according to claim 23 or 27, **characterized in that** the sewage sludge is further cooled down after depositing of the gaseous phase.

29. The method according to any of claims 17 to 28, **characterized in that** at least a part of the hydrolyzed sewage sludge is returned to the sewage sludge that has not yet been hydrolyzed.

30. The method according to any of claims 17 to 29, **characterized in that** the sewage sludge is continuously supplied.

## Revendications

1. Procédé destiné à l'hydrolyse thermique de boues d'épuration ou de curage, d'après lequel sont prévus un élément de chauffage (2) et un élément de refroidissement (4) en vue de chauffer et respectivement de refroidir les boues d'épuration, d'après lequel sont prévus, en guise d'élément de chauffage (2) et d'élément de refroidissement (4), des échangeurs de chaleur respectifs dans lesquels de la chaleur est échangée entre les boues d'épuration et un fluide, et d'après lequel les boues d'épuration et le fluide sont mutuellement séparés dans les échangeurs de chaleur, **caractérisé**
**en ce qu'**il est prévu un étranglement (9) fonctionnellement entre l'élément de chauffage (2) et l'élément de refroidissement (4), et
**en ce qu'**il est prévu un réacteur d'hydrolyse (7) pour les boues d'épuration, fonctionnellement entre l'élément de chauffage (2) et l'étranglement (9), dans lequel les boues d'épuration sont amenées à la température d'hydrolyse, le réacteur d'hydrolyse (7) étant un échangeur de chaleur indirect, qui est traversé par l'écoulement d'un agent caloporteur échauffé en externe.

2. Procédé selon la revendication 1, **caractérisé en ce que** le fluide est un liquide.

3. Procédé selon la revendication 2, **caractérisé en ce qu'**il est prévu une pompe (18) pour faire circuler le fluide en circuit (17) entre l'élément de chauffage (2) et l'élément de refroidissement (4).

4. Procédé selon l'une des revendications précédentes, **caractérisé en ce qu'**il est prévu un réservoir de détente (10) après l'étranglement (9).

5. Procédé selon la revendication 4, **caractérisé en ce qu'**au réservoir de détente (10) se raccorde une vanne de réservoir de détente (11), qui est conçue pour réguler la pression dans le réservoir de détente (10).

6. Procédé selon l'une des revendications précédentes, **caractérisé en ce qu'**un accumulateur (8) pour les boues d'épuration est prévu fonctionnellement entre le réacteur d'hydrolyse (7) et l'étranglement (9).

7. Procédé selon la revendication 3, **caractérisé en ce qu'**un élément de refroidissement supplémentaire (6) est prévu fonctionnellement entre le réacteur d'hydrolyse (7) et l'étranglement (9), l'élément de refroidissement supplémentaire (6) étant couplé thermiquement avec le circuit de circulation (17) du fluide au moyen d'une première branche supplémentaire (20).

8. Procédé selon la revendication 7, **caractérisé en ce qu'**un élément de chauffage supplémentaire (3) pour les boues d'épuration, est prévu fonctionnellement entre l'élément de chauffage (2) et le réacteur d'hydrolyse (7), l'élément de chauffage supplémentaire (3) étant couplé thermiquement avec le circuit de circulation (17) du fluide au moyen de la première branche supplémentaire (20).

9. Procédé selon la revendication 7 ou la revendication 8, **caractérisé en ce que** le débit à travers la première branche supplémentaire (20) peut être régulé au moyen d'une vanne mélangeuse thermostatique de chauffage (19).

10. Procédé selon l'une des revendications précédentes, **caractérisé en ce qu'**une pompe (1) pour les boues d'épuration est prévue fonctionnellement avant l'élément de chauffage (2).

11. Procédé selon l'une des revendications précédentes, lorsque celle-ci est rattachée à la revendication 3, **caractérisé en ce qu'**un réservoir de condensation (12) pour les boues d'épuration est prévu fonctionnellement après l'élément de refroidissement (4).

12. Procédé selon la revendication 11, **caractérisé en ce qu'**il est prévu une vanne de gaz de réservoir de condensation (14), pour réguler l'évacuation de la phase gazeuse des boues d'épuration en provenance du réservoir de condensation (12), de sorte que la phase gazeuse et les constituants liquides des boues d'épuration peuvent être évacués séparément.

13. Procédé selon la revendication 11 ou la revendication 12, **caractérisé en ce qu'**il est prévu, après le réservoir de condensation (12), un élément de refroidissement de condensats (5), qui est conçu pour refroidir les boues d'épuration.

14. Procédé selon la revendication 13, **caractérisé en ce que** l'élément de refroidissement de condensats (5) est couplé thermiquement avec l'élément de chauffage (2) et l'élément de refroidissement (4) au moyen d'une deuxième branche supplémentaire (21) du circuit de circulation (17) du fluide, une vanne mélangeuse thermostatique de refroidissement (22) étant prévue et conçue pour réguler la répartition du fluide vers l'élément de refroidissement (4) et l'élément de refroidissement de condensats (5).

15. Procédé selon l'une des revendications 12 à 14, **caractérisé en ce qu'**il est prévu une vanne de gaz de réservoir de détente (13) pour évacuer du gaz du réservoir de détente (10) et notamment l'amener au réservoir de condensation (12).

16. Procédé selon l'une des revendications précédentes, **caractérisé en ce qu'**il est prévu une conduite de recyclage (15) pour les boues d'épuration avec une vanne de recyclage (16), la vanne de recyclage (16) étant conçue pour réguler le débit de la conduite de recyclage (15).

17. Procédé selon la revendication 1, d'après lequel les boues d'épuration sont chauffées à température d'hydrolyse et sont ensuite refroidies à partir de la température d'hydrolyse, et d'après lequel le chauffage et le refroidissement s'effectuent au moyen d'échangeurs de chaleur indirects (2, 3, 4, 5, 6, 7) dans lesquels de la chaleur est échangée entre les boues d'épuration et un fluide, pendant que les boues d'épuration et le fluide sont mutuellement séparés dans les échangeurs de chaleur (2, 3, 4, 5, 6, 7).

18. Procédé selon la revendication 17, **caractérisé en ce que** de la chaleur est transférée entre les échangeurs de chaleur (2, 3, 4, 5, 6, 7) par l'intermédiaire du fluide.

19. Procédé selon la revendication 17 ou la revendication 18, **caractérisé en ce que** le fluide est un liquide que l'on fait circuler en circuit (17).

20. Procédé selon l'une des revendications 17 à 19, **caractérisé en ce que** l'on augmente la pression des boues d'épuration avant le chauffage.

21. Procédé selon l'une des revendications 17 à 20, **caractérisé en ce que** l'on procède à l'hydrolyse des boues d'épuration chauffées, en les chauffant à température d'hydrolyse dans deux étages de chauffage.

22. Procédé selon l'une des revendications 17 à 20, **caractérisé en ce que** l'on réduit de manière brusque la pression des boues d'épuration chauffées.

23. Procédé selon la revendication 22, **caractérisé en ce que** les boues d'épuration sont amenées, après la réduction brusque de pression, à un réservoir de détente (10).

24. Procédé selon la revendication 22 ou la revendication 23, **caractérisé en ce que** les boues d'épuration chauffées sont amenées, avant la détente brusque, à un accumulateur (8).

25. Procédé selon l'une des revendications 17 à 24, **.caractérisé en ce que** les boues d'épuration chauffées sont refroidies au moyen du fluide, avant que l'on réduise de manière brusque la pression des boues d'épuration.

26. Procédé selon l'une des revendications 17 à 25, **caractérisé en ce que** l'on sépare des boues d'épuration hydrolysées, après qu'ait eu lieu un refroidissement au moins partiel, une partie de la phase gazeuse.

27. Procédé selon la revendication 23, **caractérisé en ce qu'**au moins une partie de la phase gazeuse des boues d'épuration hydrolysées est séparée dans le réservoir de détente (10).

28. Procédé selon la revendication 23 ou la revendication 28, **caractérisé en ce que** l'on continue à refroidir les boues d'épuration après la séparation de la phase gazeuse.

29. Procédé selon l'une des revendications 17 à 28, **caractérisé en ce que** l'on recycle au moins une partie des boues d'épuration hydrolysées vers les boues d'épuration non encore hydrolysées.

30. Procédé selon l'une des revendications 17 à 29, **caractérisé en ce que** les boues d'épuration sont transportées en continu.
